# EUROPEAN PATENT APPLICATION

(11) **EP 4 560 729 A1**
(43) Date of publication of application: **28.05.2025**
(21) Application number: 24800138.0
(22) Date of filing: 05.02.2024
(51) Int. Cl.: H01M 4/36, H01M 4/38, H01M 4/48, H01M 4/587, C01B 32/956, H01M 4/134, H01M 10/052, H01M 4/02

(54) **NEGATIVE ELECTRODE ACTIVE MATERIAL, NEGATIVE ELECTRODE, SECONDARY BATTERY, AND METHOD FOR PRODUCING NEGATIVE ELECTRODE ACTIVE MATERIAL**

(30) Priority: 04.05.2023 KR 20230058454; 02.02.2024 KR 20240016464
(71) Applicant: LG Energy Solution, Ltd., Seoul 07335 (KR)
(72) Inventor: LEE, Sang Hyun, Daejeon 34122 (KR); KIM, Donghyuk, Daejeon 34122 (KR); LEE, Su Min, Daejeon 34122 (KR); LEE, Yong Ju, Daejeon 34122 (KR)
(74) Representative: Hoffmann Eitle
(86) International application number: PCT/KR2024/001647
(87) International publication number: WO 2024/228449

(57) **Abstract**

The negative electrode active material contains: silicon-based particles; and silicon carbide distributed in the silicon-based particles. The content of the silicon carbide is 0.1 parts by weight to 1 part by weight relative to the total of 100 parts by weight of the negative electrode active material.

## Description

### [Technical Field]

This application is based on and claims priority from Korean Patent Application No. 10-2023-0058454 filed on May 4, 2023, and Korean Patent Application No.10-2024-0016464 filed on February 2, 2024, with the Korean Intellectual Property Office, the disclosure of which is incorporated herein in its entirety by reference.

The present disclosure relates to a negative electrode active material, a negative electrode including the same, a secondary battery including the same, and a method for preparing the negative electrode active material.

### [Background Art]

Recently, with the rapid distribution of electronic devices that use batteries, such as mobile phones, laptop computers, and electric vehicles, the demand for secondary batteries with small-sized and lightweight, and having a relatively high capacity has been increased rapidly. Lithium secondary batteries are lightweight and have a high energy density, and thus are attracting attention as a driving power source for portable devices. Accordingly, research and development efforts are being conducted actively to improve the performance of lithium secondary batteries.

In general, a lithium secondary battery includes a positive electrode, a negative electrode, a separator interposed between the positive electrode and the negative electrode, an electrolyte, an organic solvent, and the like. Also, an active material layer containing a positive electrode active material and an active material layer containing a negative electrode active material may be formed on respective current collectors of the positive electrode and the negative electrode. A lithium-containing metal oxide such as LiCoO₂ and LiMn₂O₄ is used as the positive electrode active material for the positive electrode, and a carbon-based active material and a silicon-based negative electrode active material, which do not contain lithium, are used as the negative electrode active material for the negative electrode.

While a carbon material such as graphite is generally used as an active material in the negative electrode of the lithium secondary battery, the theoretical capacity density of carbon is 372 mAh/g (833 mAh/cm³). Therefore, in order to improve the energy density of the negative electrode, silicon (Si) and tin (Sn) that are alloyed with lithium, or the oxides and alloys of Si and Sn are being examined as a raw material of a negative electrode active material. Among the materials, the silicon-based materials are attracting attention because they have a lower price and a higher capacity (4200 mAh/g) than the carbon-based active materials, and have excellent fast charging characteristics.

### Prior Art Document

(Patent Literature 1) Korean Patent Laid-open Publication No. 10-2020-0065514

### [Detailed Description of the Invention]

### [Technical Problem]

The present disclosure relates to a negative electrode active material, a negative electrode including the same, a secondary battery including the same, and a method of preparing the negative electrode active material.

### [Technical Solution]

In one embodiment of the present disclosure, provided is a negative electrode active material including: silicon-based particles; and silicon carbide distributed in the silicon-based particles. In the negative electrode active material, the content of the silicon carbide is 0.1 parts by weight to 1 part by weight relative to the total of 100 parts by weight of the negative electrode active material.

In one embodiment of the present disclosure, provided is a negative electrode including the negative electrode active material.

In one embodiment of the present disclosure, provided is a secondary battery including the negative electrode.

In one embodiment of the present disclosure, provided is a method of preparing the negative electrode active material.

### [Advantageous Effects]

The negative electrode active material according to one embodiment of the present disclosure includes a small amount of silicon carbide distributed in silicon-based particles. The silicon carbide is a material that has a very strong bonding force, and is mechanically stable. When the silicon carbide is distributed inside Si, it is possible to suppress the active material particle breakage caused by charging/discharging, thereby improving the electrode lifespan characteristics. Therefore, when a small amount of silicon carbide is distributed, for example, in the above range in the silicon-based particles, lifespan characteristics of the electrode can be effectively improved. Then, the negative electrode active material as described above is advantageous in terms of cost and process because during the synthesis, silicon carbide is formed in a reduction process of a raw material without adding a separate material.

Therefore, a negative electrode including the negative electrode active material according to one embodiment of the present disclosure and a secondary battery including the negative electrode have an effect of improving the discharging capacity, initial efficiency, resistance performance and/or lifespan characteristics of the battery.

### [Best mode]

Hereinafter, the present disclosure will be described in more detail.

In the present disclosure, when it is said that a certain part "includes" a certain component, this means that the certain part may further include other components rather than excluding other components unless specifically stated to the contrary.

In the present disclosure, when one member is said to be located "on" the other member, this includes not only a case where one member is in contact with the other member but also a case where another member is present between two members.

Terms or words used in the present disclosure should not be limitedly construed as usual or dictionary meanings, and should be interpreted as meanings and concepts consistent with the technical idea of the present disclosure on the basis of the principle that the inventor can appropriately define the concept of the term in order to explain his/her own invention in the best way.

The terms used in the present disclosure are merely used to describe exemplary embodiments, and are not intended to limit the present disclosure. Singular expressions of terms used in the present disclosure include plural expressions unless the context clearly indicates otherwise.

In the present disclosure, the crystallinity of the structure included in the negative electrode active material may be confirmed through an X-ray diffraction analysis, and the X-ray diffraction analysis may be performed using an X-ray diffraction (XRD) analyzer (product name: D4-endavor, manufacturer: Bruker). In addition to the above device, devices used in the art may be appropriately employed.

In the present disclosure, the presence/absence of elements and the content of elements in the negative electrode active material may be confirmed through an Inductively Coupled Plasma (ICP) analysis, and the ICP analysis may be performed using an inductively coupled plasma emission analysis spectrometer (ICPAES, Perkin-Elmer 7300).

In the present disclosure, the average particle diameter (D₅₀) may be defined as a particle diameter corresponding to 50% of the cumulative volume in the particle size distribution curve of particles (particle size distribution graph curve). The average particle diameter (D₅₀) may be measured by using, for example, a laser diffraction method. In the laser diffraction method, it is generally possible to measure the particle diameters ranging from a submicron region to several millimeters, and to obtain results with high reproducibility and high resolution.

"About", "approximately", and "substantially" used in the present specification are used to mean ranges of numerical values or degrees or approximations thereof, taking into account inherent manufacturing and material tolerances, and are used to prevent infringers from unfairly using the disclosed contents in which precise or absolute figures provided to aid the understanding of the present disclosure are mentioned.

A silicon-based negative electrode active material used as the negative electrode active material of the lithium secondary battery has some drawback in that the degree of volume expansion/contraction according to charging/discharging tends to be large, and since the irreversible capacity is relatively high, the initial efficiency tends to be low. In the charging/discharging reaction of the lithium secondary battery, lithium ions released from the positive electrode are intercalated into the negative electrode during charging, and lithium ions intercalated in the negative electrode are deintercalated from the negative electrode and are returned back to the positive electrode during discharging. In the case of silicon-based negative electrode active material, due to the severe volume changes and surface side-reactions, a large amount of lithium intercalated into the negative electrode cannot return to the positive electrode during initial charging, thereby causing a problem of increasing the initial irreversible capacity. When the initial irreversible capacity increases, the battery capacity and the cycle decrease which is problematic. Also, in the silicon-based negative electrode active material, a cracking phenomenon of the silicon-based negative electrode active material may occur as the charging/discharging cycle progresses, causing a continuous lifespan deterioration. The existing silicon-based negative electrode active material is composed of only pure silicon, and thus is disadvantageous in terms of suppressing the volume expansion of the electrode due to the low mechanical strength of the material itself.

The present disclosure provides a silicon-based negative electrode active material with an improved cracking phenomenon and a manufacturing method thereof, and a lithium secondary battery in which the improved negative electrode active material is employed, and then the discharging capacity, the initial efficiency, the resistance performance and/or the lifespan characteristics are improved.

Hereinafter, embodiments of the present disclosure will be described in detail. However, embodiments of the present disclosure may be modified in various forms, and the scope of the present disclosure is not limited to the embodiments to be described below.

### <Negative electrode active material>

In one embodiment of the present disclosure, provided is a negative electrode active material containing silicon-based particles; and silicon carbide distributed in the silicon-based particles. In the negative electrode active material, the content of the silicon carbide is 0.1 parts by weight to 1 part by weight relative to the total of 100 parts by weight of the negative electrode active material.

The silicon-based particles have a substantially higher capacity than the conventionally used graphite-based active material, and thus, there are increasing attempts to apply the silicon-based particles as the negative electrode active material. However, these attempts are limited to the case where a trace amount of silicon-based particles are used through mixing with the graphite-based active material because during a charging/discharging process, the volume expansion rate of the silicon-based particles increases, resulting in various side effects.

In the negative electrode active material according to one embodiment of the present disclosure, silicon carbide is distributed in silicon-based particles, in an amount of 0.1 parts by weight to 1 part by weight relative to the total of 100 parts by weight of the negative electrode active material. As a result, the electrode lifespan characteristics is improved substantially, and it is possible to suppress particle cracking of the negative electrode active material during a charging/discharging process of a battery. Also, the above-described negative electrode active material is advantageous in terms of cost and process as compared to a conventional method of adding a separate material, because during the synthesis, silicon carbide is formed in a reduction process of a raw material without adding a separate material.

In one embodiment, silicon oxide (SiO₂) powder is heated to 1,800°C in a carbon atmosphere (2C), and then reduced into a melted-state silicon. The melted-state silicon is then cooled at a preset cooling speed, for example, a speed of 20°C/min to 70°C/min so that in addition to silicon (Si) particles, silicon carbide (SiC) particles are additionally formed. Through the cooling process, silicon oxide (SiO₂), which remains unreacted in the reduction process of the prior process, reacts with carbon (C) to additionally form silicon carbide (SiC) particles. Meanwhile, when the cooling process is performed at a preset speed of 20 C/min to 70°C/min, silicon carbide (SiC) is distributed in silicon (Si) particles in an amount of 0.1 parts by weight to 1 part by weight relative to the total of 100 parts by weight of the negative electrode active material.

The negative electrode active material according to one embodiment of the present disclosure contains silicon-based particles.

In one embodiment of the present disclosure, the silicon-based particles may include one or more selected from the group consisting of SiOx (x=0), SiOx (0<x<2), SiC, and Si alloys.

The silicon-based particles may include one or more selected from the group consisting of SiOx (x=0) and SiOx (0<x<2).

The silicon-based particles may include SiOx (x=0). In the silicon-based particles, the content of SiOx (x=0) may be 70 parts by weight or more relative to 100 parts by weight of the negative electrode active material. For example, in the silicon-based particles, the content of SiOx (x=0) may be 80 parts by weight or more, or 90 parts by weight or more, and may be 100 parts by weight or less, for example, 99.5 parts by weight or less or 99 parts by weight or less, relative to 100 parts by weight of the negative electrode active material.

In one embodiment of the present disclosure, when SiOx (x=0) is included as the silicon-based particles in the above content range, there is an advantage in that a high discharging capacity can be exhibited per weight as compared to the case where, instead of SiOx (x=0), SiOx (0<x<2) is included as the silicon-based particles in the above content range.

For example, when SiOx (x=0) is included as the silicon-based particles in the above content range, the discharging capacity per weight of a secondary battery containing these particles is 3400 mAh/g or more, and when SiOx (0<x<2) is included in the above content range, the discharging capacity per weight of a secondary battery containing these particles is 1400 mAh/g. Therefore, in the secondary battery to which the negative electrode active material according to an example of the present disclosure is applied, the silicon-based particles include SiOx (x=0) in the above content range, and can exert a capacity of twice or more compared to a case where the silicon-based particles include SiOx (0<x<2) in the above content range.

However, when the negative electrode active material including SiOx (x=0) in the above content range is applied to the secondary battery as the silicon-based particles, particle breakage may occur during charging/discharging in the secondary battery due to excessive volume expansion. Thus, the capacity retention of the secondary battery may be impaired, thereby causing a problem in the application to actual products. Therefore, in an effort to address the problem, the negative electrode active material according to an example of the present disclosure includes not only SiOx (x=0) in the above content range as the silicon-based particles, but also silicon carbide within the silicon-based particles in an amount of 0.1 parts by weight to 1 part by weight relative to the total of 100 parts by weight of the negative electrode active material so that the above problems can be improved.

When SiOx (x=0) is included as the silicon-based particles in the above content range, and the silicon carbide is included within the silicon-based particles in the above content range, it is possible to minimize particle breakage which occurs due to volume expansion during charging/discharging when silicon-based particles are used as the negative electrode active material. This improves capacity retention of the negative electrode active material and compensates for application problems. Thus, it is possible to provide a negative electrode active material, a negative electrode and/or a secondary battery, which exhibits a relatively high discharging capacity per weight as compared to the conventional case.

In one embodiment of the present disclosure, pure silicon (Si) particles may be used as the silicon-based particles. Using pure silicon (Si) particles as the silicon-based particles may mean that pure Si particles (SiOx (x=0)) that are not combined with other particles or elements are contained in the above range, relative to the total of 100 parts by weight of the silicon-based particles. That is, in one embodiment of the present disclosure, the silicon-based particles may be composed of silicon-based particles in which the content of SiOx (x=0) is 100 parts by weight relative to the total of 100 parts by weight of the silicon-based particles.

In one embodiment of the present disclosure, in the silicon-based particles, the content of SiOx (0<x<2) may be 10 parts by weight or less, for example, 5 parts by weight or less, or 3 parts by weight to 5 parts by weight, relative to 100 parts by weight of the negative electrode active material. That is, the silicon-based particles may further contain a trace amount of other impurities.

In one embodiment of the present disclosure, the silicon-based particles may contain metal impurities. Here, the metal impurities are metals that may be generally included in the silicon-based particles, and the content thereof may be, for example, 0.1 parts by weight or less relative to 100 parts by weight of the silicon-based particles.

In one embodiment of the present disclosure, the silicon-based particles may exist in, for example, a crystalline or amorphous form, and may be porous or nonporous. In an example, the silicon-based particles may not be porous. The silicon-based particles are, for example, spherical or fragmented particles. And, the silicon-based particles may also have a fibrous structure or may be present in the form of a silicon-containing film or coating.

The negative electrode active material according to one embodiment of the present disclosure contains silicon carbide distributed in the silicon-based particles.

In the present disclosure, the silicon carbide has a bond of Si and C.

The silicon carbide is a material that has a very strong bonding force, and is mechanically stable. When the silicon carbide is distributed inside Si, it is possible to suppress the active material particle breakage caused by charging/discharging, thereby improving the electrode lifespan characteristics. Therefore, since the silicon carbide is distributed in the silicon-based particles, the particle breakage of the active material can be prevented and the electrode lifespan characteristics can be effectively improved.

In one embodiment of the present disclosure, the content of the silicon carbide may be 0.1 parts by weight to 1 part by weight relative to the total of 100 parts by weight of the negative electrode active material. For example, the content of the silicon carbide may be greater than 0.1 parts by weight and may be 1 part by weight or less, relative to the total of 100 parts by weight of the negative electrode active material. The content of the silicon carbide may be 0.2 parts by weight to 0.8 parts by weight relative to the total of 100 parts by weight of the negative electrode active material, or may be 0.4 parts by weight to 0.8 parts by weight relative to the total of 100 parts by weight of the negative electrode active material.

Therefore, when the small amount of silicon carbide within the above range is distributed inside the silicon-based particles or on the surface of the silicon-based particles, it is possible to minimize the decrease in the electrode capacity and to effectively prevent particle breakage of the active material, thereby effectively improving the lifespan characteristics of the electrode. The above-described negative electrode active material is advantageous in terms of cost and process compared to the case where a separate material is added, because during the synthesis, silicon carbide can be formed in a reduction process of a raw material without adding the separate material.

In one embodiment of the present disclosure, the content of carbon may be 0.03 parts by weight to 0.3 parts by weight relative to the total of 100 parts by weight of the negative electrode active material.

The content of the silicon carbide may be analyzed by using the Rietveld refinement method of XRD measurement equipment.

In one embodiment of the present disclosure, the average particle diameter (D₅₀) of the negative electrode active material may be 0.01 µm to 100 µm, or may be, for example, 0.5 µm to 20 µm or 1 µm to 10 µm. When the average particle diameter falls within the above range, the specific surface area of particles falls within an appropriate range, and a negative electrode slurry is formed with a viscosity falling within an appropriate range. Accordingly, particles constituting the negative electrode slurry are smoothly dispersed. Also, since the size of the negative electrode active material has a value equal to or greater than the above lower limit, the contact areas between negative electrode active material particles and conductive materials are excellent due to a composite composed of a conductive material and a binder within the negative electrode slurry. This increases the possibility that a conductive network will be continued, thereby increasing the capacity retention. Meanwhile, when the average particle diameter satisfies a value equal to or lower than the above upper limit, excessively large particles are excluded and a smooth surface of the negative electrode is formed. This can prevent a current density non-uniformity phenomenon during charging/discharging.

In one embodiment of the present disclosure, the negative electrode active material generally has a characteristic BET specific surface area. The BET specific surface area of the negative electrode active material is, for example, 0.01 m²/g to 100.0 m²/g, 0.1 m²/g to 50.0 m²/g, 0.1 m²/g to 10.0 m²/g, or 0.5 m²/g to 5 m²/g. The BET specific surface area is measured in accordance with DIN 66131 (using nitrogen).

### <Manufacturing method of negative electrode active material>

According to one embodiment of the present disclosure, provided is a method of preparing the above-described negative electrode active material. For example, the manufacturing method includes the step of reducing silicon dioxide into silicon through a reaction with carbon; and the step of forming silicon carbide by using remaining carbon after the reduction. Provided is a method of preparing the negative electrode active material, the method including the step of reducing silicon dioxide by using carbon to obtain silicon; and the step of forming silicon carbide by controlling cooling conditions after the silicon synthesis.

The above-described negative electrode active material manufacturing method is advantageous in terms of cost and process because during the synthesis, silicon carbide is formed in a reduction process of a raw material without adding the separate material.

The step of reducing silicon dioxide into silicon through a reaction with carbon may be carried out at a high temperature of 1800°C or more. Also, when the cooling speed is adjusted after the reduction reaction, Si or silicon dioxide which did not react in the reduction process reacts with remaining carbon to form silicon carbide in Si. Here, the cooling speed falls within a range of 20°C/min to 70°C/min, and the content of silicon carbide in Si can be adjusted by adjusting the cooling speed. According to one embodiment, the cooling speed is greater than, for example, 20°C/min and equal to or lower than 55°C/min, or is, for example, 23°C/min to 50°C/min When the silicon carbide is formed, a Si-C peak is confirmed in the XRD measurement of Si particles, and the distribution ratio of silicon carbide can be determined by using a Rietveld refinement method.

Meanwhile, in the present embodiment, as mentioned above, descriptions have been made on a method using silicon reduction and cooling in preparing the negative electrode active material containing silicon carbide, but the present disclosure is not limited thereto. The silicon carbide-containing negative electrode active material may also be prepared by another method. For example, it is also possible to prepare the silicon carbide-containing negative electrode active material by injecting nano-carbon particles into silicon particles under the above-described conditions, for example, in an amount of 0.1 parts by weight to 1 part by weight relative to the total of 100 parts by weight of the negative electrode active material.

### <Negative electrode>

The negative electrode according to one embodiment of the present disclosure may include the above-described negative electrode active material.

For example, the negative electrode may include a negative electrode current collector and a negative electrode active material layer disposed on at least one surface of the negative electrode current collector. The negative electrode active material layer may include the negative electrode active material prepared through the above process, in which silicon carbide is formed inside Si. Further, the negative electrode active material layer may further include a binder, a thickener and/or a conductive material.

In one embodiment of the present disclosure, the negative electrode current collector may generally have a thickness of 1 µm to 100 µm. The negative electrode current collector is not particularly limited as long as it has high conductivity without causing chemical changes in the corresponding battery. For example, copper, stainless steel, aluminum, nickel, titanium, baked carbon, copper or stainless steel whose surface is treated with carbon, nickel, titanium, silver, etc., and aluminum-cadmium alloy may be used. Also, it is possible to strengthen the bonding strength of the negative electrode active material by forming fine irregularities on the surface, and the use in various forms such as a film, a sheet, a foil, a net, a porous body, a foam, and a nonwoven fabric is possible.

In one embodiment of the present disclosure, the thickness of the negative electrode current collector may be 1 µm to 100 µm, and the thickness of the negative electrode active material layer may be 20 µm to 500 µm. However, the thicknesses may be variously modified according to the type and application of the negative electrode to be used, but are not limited thereto.

The negative electrode active material layer may be formed by applying, drying and roll-pressing the negative electrode slurry on at least one surface of the current collector. The negative electrode slurry contains the negative electrode active material, a binder, a thickener and/or a conductive material.

In one embodiment of the present disclosure, the negative electrode slurry may include a negative electrode active material layer composition; and a slurry solvent.

In one embodiment of the present disclosure, the solid content of the negative electrode slurry may satisfy a range of 5% to 40%.

In another embodiment, the solid content of the negative electrode slurry may satisfy a range of 5% to 40%, for example, 7% to 35%, or 10% to 30%.

The solid content of the negative electrode slurry may mean the content of the negative electrode active material layer composition included in the negative electrode slurry, and may mean the content of the negative electrode active material layer composition relative to 100 parts by weight of the negative electrode slurry.

When the solid content of the negative electrode slurry satisfies the above range, the viscosity is appropriate in formation of the negative electrode active material layer. Therefore, the particle agglomeration phenomenon of the negative electrode active material layer composition can be minimized, and thus the negative electrode active material layer can be efficiently formed.

In one embodiment of the present disclosure, the slurry solvent is not limited as long as it can dissolve the negative electrode active material layer composition, but, for example, distilled water may be used.

The negative electrode according to one embodiment of the present disclosure may be formed by coating and drying the negative electrode slurry on the negative electrode current collector layer.

Through the drying step, the slurry solvent in the negative electrode slurry may be dried.

In one embodiment of the present disclosure, the negative electrode active material layer composition may include one or more selected from the group consisting of a negative electrode active material; a negative electrode conductive material; and a negative electrode binder.

In one embodiment of the present disclosure, the negative electrode active material of the present disclosure may be used as the above negative electrode active material, or the negative electrode active material of the present disclosure and an additional negative electrode active material may be used together. In this case, it is possible to manufacture a lithium secondary battery in which overall performance such as cycle lifespan characteristics is further improved.

As for the additional negative electrode active material, a compound through which lithium can be reversibly intercalated and deintercalated may be used. For example, it may be a carbon-based negative electrode active material. Also, the additional negative electrode active material may be a carbonaceous material such as artificial graphite, natural graphite, graphitized carbon fiber, and amorphous carbon; a metallic substance that can be alloyed with lithium, such as Si, Al, Sn, Pb, Zn, Bi, In, Mg, Ga, Cd, Si alloy, Sn alloy or Al alloy; a metal oxide by which lithium can be doped or dedoped, such as SiO_{β}(0 < β < 2), SnO₂, vanadium oxide, lithium titanium oxide, and lithium vanadium oxide; or a composite containing the above metallic substance and the carbonaceous material, such as an Si-C composite or an Sn-C composite, and then any one of these or a mixture of two or more may be used. Also, as for the negative electrode active material, a metal lithium thin film may also be used. In addition, both low-crystalline carbon and high-crystalline carbon can be used as the carbon material. Representative low-crystalline carbon may include soft carbon and hard carbon, and representative high-crystalline carbon may include: amorphous, plate-shaped, scaly, spherical or fibrous natural graphite or artificial graphite; Kish graphite, pyrolytic carbon, mesophase pitch-based carbon fiber, meso-carbon microbeads, mesophase pitches, and high-temperature baked carbon such as petroleum or coal tar pitch derived cokes.

In one embodiment of the present disclosure, the negative electrode includes the negative electrode current collector; and the negative electrode active material layer, and the negative electrode active material layer includes the negative electrode active material according to the present disclosure. The content of the negative electrode active material may be 60 parts by weight or more relative to 100 parts by weight of the negative electrode active material layer.

In another embodiment, the content of the negative electrode active material may be 60 parts by weight or more, for example, 65 parts by weight or more, or 70 parts by weight or more, and may be 95 parts by weight or less, or 90 parts by weight or less, or 80 parts by weight or less, relative to 100 parts by weight of the negative electrode active material layer composition.

The negative electrode active material layer composition according to the present disclosure includes both the negative electrode conductive material and the negative electrode binder which can control the volume expansion rate during a charging/discharging process even when the negative electrode active material with a significantly high capacity is used in the above range. Thus, the performance of the negative electrode is not deteriorated and the output characteristics are excellent in charging and discharging.

In one embodiment of the present disclosure, the negative electrode active material may have a non-spherical shape, and its circularity is, for example, 0.9 or less, for example, 0.7 to 0.9, for example, 0.8 to 0.9, for example, 0.85 to 0.9.

In the present disclosure, the circularity is determined by the following Formula A. In the Formula A, A is an area and P is a boundary line.

### [Formula A]

### 4πA/P²

Conventionally, only a graphite-based compound has been generally used as the negative electrode active material. Meanwhile, recently, as the demand for high-capacity batteries increases, there are increasing attempts to mix a silicon-based compound so as to increase the capacity. However, in the case of the silicon-based compound, there is a limitation in that the volume rapidly expands during a charging/discharging process, which may damage a conductive path formed in the negative electrode active material layer and moreover, decrease the battery performance. Thus, the type of the negative electrode conductive material to be used together with the negative electrode active material is important.

In one embodiment of the present disclosure, the negative electrode conductive material may include one or more selected from the group consisting of a dot-type conductive material; a planar conductive material; and a linear conductive material.

In one embodiment of the present disclosure, the dot-type conductive material refers to a conductive material which can be used to improve conductivity in the negative electrode, and has conductivity without causing chemical changes. For example, the dot-type conductive material may be at least one type selected from the group consisting of natural graphite, artificial graphite, carbon black, acetylene black, Ketjen black, channel black, furnace black, lamp black, thermal black, fluorocarbon, aluminum powder, nickel powder, zinc oxide, potassium titanate, titanium oxide and polyphenylene derivatives, and may include carbon black in one embodiment in terms of high conductivity achievement, and excellent dispersibility.

In one embodiment of the present disclosure, the BET specific surface area of the dot-type conductive material may be 40 m²/g to 70 m²/g, or may be, for example, 45 m²/g to 65 m²/g, or 50 m²/g to 60 m²/g.

In one embodiment of the present disclosure, the particle diameter of the dot-type conductive material may be 10 nm to 100 nm, or may be, for example, 20 nm to 90 nm, or 40 nm to 60 nm.

In one embodiment of the present disclosure, the negative electrode conductive material may include the planar conductive material.

The planar conductive material may perform a role of improving conductivity by increasing surface contact between silicon particles within the negative electrode, and at the same time, a role of suppressing a conductive path from being disconnected by volume expansion, and then is used as a concept including a bulk-type conductive material or a plate-shaped conductive material.

In one embodiment of the present disclosure, the planar conductive material may include at least one selected from the group consisting of plate-shaped graphite, graphene, graphene oxide, and graphite flakes, and may be plate-shaped graphite in one embodiment.

In one embodiment of the present disclosure, the average particle diameter (D₅₀) of the planar conductive material may be 2 µm to 7 µm, and may be, for example, 3 µm to 6 µm, or 4 µm to 5 µm. When the above range is satisfied, due to a sufficient particle size, dispersion is easy without causing an excessive increase in the viscosity of a negative electrode slurry. Therefore, the dispersion effect is excellent in the dispersion using the same equipment and time.

In one embodiment of the present disclosure, D₁₀ of the planar conductive material may be 0.5 µm to 1.5 µm, D₅₀ may be 2.5 µm to 3.5 µm, and D₉₀ may be 7.0 µm to 15.0 µm.

In one embodiment of the present disclosure, as for the planar conductive material, a high specific surface area-planar conductive material having a high BET specific surface area; or a low specific surface area-planar conductive material may be used.

In one embodiment of the present disclosure, the high specific surface area-planar conductive material; or the low specific surface area-planar conductive material may be used as the planar conductive material without limitation. However, in one embodiment, since the electrode performance may be affected to some extent by the dispersion of the planar conductive material according to the present disclosure, the low specific surface area-planar conductive material causing no problems in dispersion may be used.

In one embodiment of the present disclosure, the BET specific surface area of the planar conductive material may be 5 m²/g or more.

In another embodiment, the BET specific surface area of the planar conductive material may be 5 m²/g to 500 m²/g, and may be, for example, 5 m²/g to 300 m²/g, or 5 m²/g to 250 m²/g.

In another embodiment, the planar conductive material is a high specific surface area-planar conductive material, and its BET specific surface area may satisfy a range of 50 m²/g to 500 m²/g, for example, 80 m²/g to 300 m²/g, or 100 m²/g to 300 m²/g.

In another embodiment, the planar conductive material is a low specific surface area-planar conductive material, and its BET specific surface area may satisfy a range of 5 m²/g to 40 m²/g, for example, 5 m²/g to 30 m²/g, or 5 m²/g to 25 m²/g.

Other negative electrode conductive materials may include linear conductive materials such as carbon nanotubes. The carbon nanotubes may be bundle-type carbon nanotubes. The bundle-type carbon nanotubes may include a plurality of carbon nanotube units. For example, here, the 'bundle-type' refers to a secondary shape in the form of a bundle or a rope unless otherwise stated, in which carbon nanotube units are arranged side by side or are entangled while the longitudinal axes of the carbon nanotube units are substantially in the same orientation. The carbon nanotube unit has a graphite surface (graphite sheet) in the form of a cylinder with a nano-sized diameter, and has an sp²-bonded structure. Here, depending on the angle and structure in which the graphite surface is rolled, characteristics of a conductor or a semiconductor can be exhibited. As compared to the entangled-type carbon nanotubes, the bundle-type carbon nanotubes may be uniformly dispersed in the manufacturing of the negative electrode, and then a conductive network in the negative electrode may be smoothly formed, thereby improving the conductivity of the negative electrode.

In one embodiment of the present disclosure, the content of the negative electrode conductive material may be 10 parts by weight to 40 parts by weight relative to 100 parts by weight of the negative electrode active material layer composition.

In another embodiment, the content of the negative electrode conductive material may be 10 parts by weight to 40 parts by weight, for example, 10 parts by weight to 30 parts by weight, or 15 parts by weight to 25 parts by weight, relative to 100 parts by weight of the negative electrode active material layer composition.

The negative electrode conductive material according to the present disclosure has a substantially separate configuration from a conductive material applied to the positive electrode. That is, the negative electrode conductive material according to the present disclosure performs a role of controlling a contact point between negative electrode active materials causing a substantially large expansion in the electrode volume in charging and discharging. Meanwhile, the positive electrode conductive material performs a role of a buffer when roll-pressed, and performs a role of providing some conductivity, and thus has different configurations and roles from the negative electrode conductive material of the present disclosure.

Also, the negative electrode conductive material according to the present disclosure is applied to the silicon-based negative electrode active material, and has a substantially different configuration from the conductive material applied to the graphite-based active material. That is, the conductive material used for an electrode having the graphite-based active material simply has smaller particles than the active material, and has a property of improving output characteristics and providing some conductivity, and thus has different configurations and roles from the negative electrode conductive material applied together with the silicon-based negative electrode active material as in the present disclosure.

In one embodiment of the present disclosure, the above-described planar conductive material used as the negative electrode conductive material has a different structure and role from a carbon-based active material generally used as the negative electrode active material. For example, the carbon-based active material used as the negative electrode active material may be artificial graphite or natural graphite, and refers to a material that is processed and used in the form of a spherical or dot shape so as to facilitate the storage and release of lithium ions.

Meanwhile, the planar conductive material used as the negative electrode conductive material is a material having a planar or plate shape, and may be expressed as plate-shaped graphite. That is, the planar conductive material is a material included to maintain a conductive path within a negative electrode active material layer and refers to a material that is not used as a role of storing and releasing lithium but is used to secure a conductive path by a planar shape within the negative electrode active material layer.

That is, in the present disclosure, the fact that the plate-shaped graphite is used as the conductive material means that the graphite is processed into a planar or plate shape and used as a material for securing a conductive path, but not used as a role of storing or releasing lithium. Here, the negative electrode active material included together with the plate-shaped graphite has high capacity characteristics in storing and releasing lithium, and performs a role of storing and releasing entire lithium ions transferred from the positive electrode.

Meanwhile, in the present disclosure, the use of the carbon-based active material as the active material means that the carbon-based active material is processed into a dot-type or spherical shape and is used as a material that performs a role of storing or releasing lithium.

In one embodiment of the present disclosure, artificial graphite or natural graphite, which is a carbon-based active material, may have a BET specific surface area satisfying a range of 0.1 m²/g to 4.5 m²/g. Also, plate-shaped graphite, which is a planar conductive material, may have a planar shape and its BET specific surface area may be 5 m²/g or more.

In one embodiment of the present disclosure, the negative electrode binder may include at least one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethylcellulose (CMC), starch, hydroxypropyl cellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluororubber, poly acrylic acid and their substitutes obtained by replacing hydrogen with Li, Na or Ca, and may include various copolymers of these.

The binder according to one embodiment of the present disclosure performs a role of holding the negative electrode active material and the negative electrode conductive material to prevent distortion and structural deformation of a negative electrode structure in the volume expansion and relaxation of the silicon-based negative electrode active material. Any general negative electrode binders satisfying the above role may be applied. For example, an aqueous binder may be used or a PAM-based binder may be used.

In one embodiment of the present disclosure, the content of the negative electrode binder may be 30 parts by weight or less, for example, 25 parts by weight or less, or 20 parts by weight or less, and may be 1 part by weight or more or 3 parts by weight or more, relative to 100 parts by weight of the negative electrode active material layer composition.

### <Secondary battery>

The secondary battery according to one embodiment of the present disclosure includes the above-described negative electrode according to one embodiment. For example, the secondary battery may include a negative electrode, a positive electrode, a separator interposed between the positive electrode, and an electrolyte, and the negative electrode is the same as the above-described negative electrode. Since the negative electrode has been described above, detailed descriptions thereof will be omitted.

The positive electrode may include a positive electrode current collector and a positive electrode active material layer that is formed on at least one surface of the positive electrode current collector, and includes the positive electrode active material.

In the positive electrode, the positive electrode current collector is not particularly limited as long as it has conductivity without causing chemical changes in the battery. For example, stainless steel, aluminum, nickel, titanium, baked carbon, or aluminum or stainless steel whose surface is treated with carbon, nickel, titanium, silver, etc. may be used. Also, the positive electrode current collector may usually have a thickness of 3 µm to 500 µm, and it is also possible to increase the adhesion of the positive electrode active material by forming fine irregularities on the surface of the current collector. For example, the use in various forms such as a film, a sheet, a foil, a net, a porous body, a foam, and a nonwoven fabric is possible.

The positive electrode active material may be a commonly used positive electrode active material. Examples of the positive electrode active material may include: a layered compound such as lithium cobalt oxide (LiCoO₂) and lithium nickel oxide (LiNiO₂), or a compound substituted with one or more transition metals; lithium iron oxide such as LiFe₃O₄; lithium manganese oxide such as chemical formulas Li_{1+c1}Mn_{2-c1}O₄ (0≤c1≤0.33), LiMnO₃, LiMn₂O₃, and LiMnO₂; lithium copper oxide (Li₂CuO₂); vanadium oxide such as LiV₃O₈, V₂O₅, and Cu₂V₂O₇; Ni site-type lithium nickel oxide represented by the chemical formula LiNi_{1-c2}M_{c2}O₂ (where M is at least one selected from the group including Co, Mn, Al, Cu, Fe, Mg, B and Ga, and 0.01≤c2≤0.5 is satisfied); lithium manganese composite oxide represented by a chemical formula LiMn_{2-c3}M_{c3}O₂ (where M is at least one selected from the group including Co, Ni, Fe, Cr, Zn and Ta, and 0.01≤c3≤0.1 is satisfied) or Li₂Mn₃MO₈ (where M is at least one selected from the group including Fe, Co, Ni, Cu and Zn); and LiMn₂O₄ in which a part of Li in the chemical formula is substituted with an alkaline earth metal ion, but are not limited to these. For example, the positive electrode may be Li-metal as well.

The positive electrode active material layer may include a positive electrode conductive material and a positive electrode binder together with the above-described positive electrode active material.

The positive electrode conductive material is used to provide conductivity to the electrode, and may be used without particular limitation in a configured battery as long as it has electronic conductivity without causing chemical changes. Examples may include graphite such as natural graphite or artificial graphite; carbon-based materials such as carbon black, acetylene black, Ketjen black, channel black, furnace black, lamp black, thermal black, and carbon fiber; metal powder or metal fiber such as copper, nickel, aluminum, and silver; conductive whiskers such as zinc oxide and potassium titanate; conductive metal oxides such as titanium oxide; or conductive polymers such as polyphenylene derivatives, and among these, one type may be used alone or a mixture of two or more types may be used.

Also, the positive electrode binder performs a role of improving the adhesion between particles of the positive electrode active material and the adhesive strength between the positive electrode active material and the positive electrode current collector. Examples thereof may include polyvinylidene fluoride (PVDF), polyvinylidene fluoride-hexafluoropropylene copolymer (PVDF-co-HFP), polyvinyl alcohol, polyacrylonitrile, carboxymethylcellulose (CMC), starch, hydroxypropyl cellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluororubber, or various copolymers thereof, and among these, one type may be used alone or a mixture of two or more types may be used.

The separator separates the negative electrode and the positive electrode from each other and provides a movement passage of lithium ions, and may be used without particular limitation as long as it is usually used as a separator in the secondary battery. The separator may have a low resistance to ion movement of the electrolyte and excellent electrolyte moisture retention capacity. According to one embodiment, porous polymer films, or a stacked structure of two or more layers of these may be used. For example, the porous polymer films may be made of polyolefin-based polymers such as an ethylene homopolymer, a propylene homopolymer, an ethylene/butene copolymer, an ethylene/hexene copolymer and an ethylene/methacrylate copolymer. In addition, a conventional porous non-woven fabric, for example, a non-woven fabric made of high melting point-glass fiber, polyethylene terephthalate fiber, etc. may also be used. Also, a coated separator containing ceramic components or polymer materials may also be used so as to ensure heat resistance or mechanical strength, and optionally, the use in a single-layer or multi-layer structure is possible.

Examples of the electrolyte may include an organic liquid electrolyte, an inorganic liquid electrolyte, a solid polymer electrolyte, a gel-type polymer electrolyte, a solid inorganic electrolyte, and a melted inorganic electrolyte, which can be used in manufacturing of the lithium secondary battery, but are not limited to these.

For example, the electrolyte may include a non-aqueous organic solvent and a metal salt.

As for the non-aqueous organic solvent, it is possible to use, for example, aprotic organic solvents such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate, and ethyl propionate.

Among the above carbonate-based organic solvents, ethylene carbonate and propylene carbonate, which are cyclic carbonates, may be used as a non-aqueous organic solvent because they are high-viscosity organic solvents and can easily dissociate lithium salts due to a high dielectric constant. Then, when these cyclic carbonates are used through mixing with linear carbonates having a low viscosity and a low dielectric constant, such as dimethyl carbonate and diethyl carbonate, at an appropriate ratio, an electrolyte having a high electrical conductivity may be made.

As for the metal salt, a lithium salt may be used, and the lithium salt is a material that is easily soluble in the non-aqueous electrolyte. For example, as anions of the lithium salt, one or more types selected from the group including F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used.

In addition to the electrolyte components, for the purpose of improving battery life characteristics, suppressing battery capacity reduction, and improving battery discharge capacity, the electrolyte may further include one or more types of additives, such as, for example, a haloalkylene carbonate-based compound such as difluoro ethylene carbonate, pyridine, triethylphosphite, triethanolamine, cyclic ether, ethylene diamine, n-glyme, hexamethyl phosphoric acid triamide, nitrobenzene derivatives, sulfur, quinone imine dye, N-substituted oxazolidinone, N,N-substituted imidazolidine, ethylene glycol dialkyl ether, ammonium salt, pyrrole, 2-methoxy ethanol, or aluminum trichloride.

According to another embodiment of the present disclosure, provided are a battery module including the above secondary battery as a unit cell and a battery pack including the same. The battery module and the battery pack include the above secondary battery having a high capacity, and high rate characteristics, and cycling characteristics, and may be used as a power source of medium-to-large devices selected from the group including an electric vehicle, a hybrid electric vehicle, a plug-in hybrid electric vehicle and a power storage system.

### <Example and Comparative Example>

### Example 1

A reduction reaction was performed by using carbon at a high temperature of 1800°C or more so as to synthesize silicon. Then, the cooling speed was adjusted as noted in Table 1 below, so that a reaction was caused between Si and/or remaining silicon dioxide which did not react, and remaining carbon. Then, silicon carbide was formed in Si. A negative electrode active material, which contained 0.6 parts by weight of silicon carbide and 99.4 parts by weight of Si as the rest relative to 100 parts by weight of the negative electrode active material, was obtained.

### Example 2

A negative electrode active material was obtained in the same manner as in Example 1 except that the cooling speed was changed as noted in Table 1 below in the experiment subsequent to the reduction reaction. The negative electrode active material contained 0.1 parts by weight of silicon carbide and 99.9 parts by weight of Si as the rest relative to 100 parts by weight of the negative electrode active material.

### Example 3

A negative electrode active material was obtained in the same manner as in Example 1 except that the cooling speed was changed as noted in Table 1 below in the experiment subsequent to the reduction reaction. The negative electrode active material contained 0.2 parts by weight of silicon carbide and 99.8 parts by weight of Si as the rest relative to 100 parts by weight of the negative electrode active material.

### Example 4

A negative electrode active material was obtained in the same manner as in Example 1 except that the cooling speed was changed as noted in Table 1 below in the experiment subsequent to the reduction reaction. The negative electrode active material contained 0.4 parts by weight of silicon carbide and 99.6 parts by weight of Si as the rest relative to 100 parts by weight of the negative electrode active material.

### Example 5

A negative electrode active material was obtained in the same manner as in Example 1 except that the cooling speed was changed as noted in Table 1 below in the experiment subsequent to the reduction reaction. The negative electrode active material contained 0.8 parts by weight of silicon carbide and 99.2 parts by weight of Si as the rest relative to 100 parts by weight of the negative electrode active material.

### Example 6

A negative electrode active material was obtained in the same manner as in Example 1 except that the cooling speed was changed as noted in Table 1 below in the experiment subsequent to the reduction reaction. The negative electrode active material contained 1.0 parts by weight of silicon carbide and 99.0 parts by weight of Si as the rest relative to 100 parts by weight of the negative electrode active material.

### Comparative Example 1

A negative electrode active material was obtained in the same manner as in Example 1 except that the cooling speed was changed as noted in Table 1 below in the experiment subsequent to the reduction reaction. The negative electrode active material was composed of only Si and did not contain silicon carbide relative to 100 parts by weight of the negative electrode active material.

### Comparative Example 2

A negative electrode active material was obtained in the same manner as in Example 1 except that the cooling speed was changed as noted in Table 1 below in the experiment subsequent to the reduction reaction. The negative electrode active material contained 0.05 parts by weight of silicon carbide and 99.95 parts by weight of Si as the rest relative to 100 parts by weight of the negative electrode active material.

### Comparative Example 3

A negative electrode active material was obtained in the same manner as in Example 1 except that the cooling speed was changed as noted in Table 1 below in the experiment subsequent to the reduction reaction. The negative electrode active material contained 1.5 parts by weight of silicon carbide and 98.5 parts by weight of Si as the rest relative to 100 parts by weight of the negative electrode active material.

### Comparative Example 4

A negative electrode active material was obtained in the same manner as in Example 1 except that the cooling speed was changed as noted in Table 1 below in the experiment subsequent to the reduction reaction. The negative electrode active material contained 2.0 parts by weight of silicon carbide and 98.0 parts by weight of Si as the rest relative to 100 parts by weight of the negative electrode active material.

The compositions of the above negative electrode active materials prepared in Examples and Comparative Examples are as noted in Table 1 below.

**[Table 1]**

| | Relative to the total of 100 parts by weight of the negative electrode active material | | Cooling speed (°C/min) |
|---|---|---|---|
| | Content of silicon carbide (parts by weight relative to 100 parts by weight of the negative electrode active material) | Content of C (parts by weight) | |
| Example 1 | 0.6 | 0.18 | 35 |
| Example 2 | 0.1 | 0.03 | 23 |
| Example 3 | 0.2 | 0.06 | 26 |
| Example 4 | 0.4 | 0.12 | 31 |
| Example 5 | 0.8 | 0.24 | 42 |
| Example 6 | 1 | 0.3 | 48 |
| Comparative Example 1 | 0 | 0 | 15 |
| Comparative Example 2 | 0.05 | 0.01 | 20 |
| Comparative Example 3 | 1.5 | 0.45 | 57 |
| Comparative Example 4 | 2 | 0.60 | 69 |

The contents of the silicon carbide and C were measured by using the Rietveld refinement method of XRD analysis equipment.

### Evaluation of discharging capacity, initial efficiency, and lifespan (capacity retention) characteristics

A positive electrode, a negative electrode, and a battery were manufactured through the following methods by using active materials for the positive electrode and the negative electrode, respectively.

### <Production of negative electrode>

A negative electrode active material including the above silicon-based active material in Table 1, a first conductive material, a second conductive material, and polyacrylamide as a binder were added to distilled water as a solvent for forming a negative electrode slurry at a weight ratio of 80:9.6:0.4:10 to prepare the negative electrode slurry (solid content concentration: 28 weight%).

For example, the first conductive material was plate-shaped graphite (specific surface area: 17 m²/g, average particle diameter (D₅₀): 3.5 µm), and the second conductive material was SWCNT.

In the mixing method, the first conductive material, the binder, and water were dispersed by using a homomixer at 2500 rpm, for 30 min Then, the second conductive material was added and dispersed for 10 min Next, the silicon-based active material was added and dispersion was performed at 2500 rpm, for 30 min to prepare the negative electrode slurry.

The negative electrode slurry was coated on one surface of a copper current collector (thickness: 15 µm) as a negative electrode current collector layer at a loading amount of 227 mg/50 cm², was roll-pressed, and dried in a vacuum oven of 130°C for 10 h. Then, a negative electrode active material layer (thickness: 23 µm) was formed. This was used as a negative electrode (thickness of negative electrode: 38 µm, porosity of negative electrode: 40.0%).

### < Production of positive electrode >

LiNi_{0.6}Co_{0.2}Mn_{0.2}O₂ (average particle diameter (D50): 15 µm) as a positive electrode active material, carbon black (product name: Super C65, manufacturer: Timcal) as a conductive material, and polyvinylidene fluoride (PVdF) as a binder were added to N-methyl-2-pyrrolidone (NMP) as a solvent for forming a positive electrode slurry at a weight ratio of 97:1.5:1.5 to prepare the positive electrode slurry (solid content concentration: 78 weight%).

The positive electrode slurry was coated on both surfaces of an aluminum current collector (thickness: 12 µm) as a positive electrode current collector at a loading amount of 537 mg/25 cm², was roll-pressed, and dried in a vacuum oven of 130°C for 10 h. Then, a positive electrode active material layer (thickness: 65 µm) was formed, and a positive electrode was prepared (thickness of positive electrode: 77 µm, porosity: 26%).

A lithium secondary battery was manufactured by interposing a polyethylene separator between the positive electrode and the negative electrode of Examples and Comparative Examples and injecting an electrolyte.

The electrolyte was obtained by adding 3 weight% of vinylene carbonate relative to the total weight of the electrolyte, to an organic solvent, and adding LiPF₆ as a lithium salt at a concentration of 1 M. In the organic solvent, fluoroethylene carbonate (FEC) and diethyl carbonate (DEC) were mixed at a volume ratio of 10:90.

### <Experimental Example>

### Experimental Example 1: cycle lifespan and capacity data

For the above-prepared secondary batteries including the negative electrodes, the lifespan maintenance rate measurement was conducted by using an electrochemical charger/discharger and the capacity retention was evaluated. In-situ cycle test was conducted for the secondary battery at 4.2-3.0V 1C/0.5C, and in the test, the capacity retention rate was measured by charging/discharging (4.2-3.0V) at 0.33C/0.33C every 50 cycles. capacity retention rate (%) = {(discharging capacity in Nth cycle)/(discharging capacity in first cycle)} × 100

Also, in order to measure capacity data, a Li metal/negative electrode cell was manufactured by using the above-prepared negative electrode. Next, the Li metal/negative electrode cell was tested at 1.5V-0.005V and 0.1C/0.1C and the discharging capacity at the first cycle is noted below.

**[Table 2]**

| | Content of silicon carbide (parts by weight relative to 100 parts by weight of the negative electrode active material) | capacity retention rate after 200 cycles (%) | Capacity (mAh/g) |
|---|---|---|---|
| Example 1 | 0.6 | 90 | 3462 |
| Example 2 | 0.1 | 87 | 3476 |
| Example 3 | 0.2 | 87 | 3471 |
| Example 4 | 0.4 | 88 | 3467 |
| Example 5 | 0.8 | 89 | 3456 |
| Example 6 | 1.0 | 87 | 3450 |
| Comparative Example 1 | 0 | 85 | 3488 |
| Comparative Example 2 | 0.05 | 84 | 3484 |
| Comparative Example 3 | 1.5 | 85 | 3436 |
| Comparative Example 4 | 2 | 85 | 3418 |

As can be seen in Table 2, it was found out that Examples 1 to 6 according to the present disclosure, in which the electrode was produced by using the silicon-based active material satisfying the silicon carbide content range according to the present disclosure, were excellent in both the capacity retention rate and the capacity after 200 cycles. For example, it may be inferred that since Examples 1 to 6 contain silicon carbide within the scope of the present disclosure, the capacity decrease is minimized and the stress applied to the silicon-based active material is reduced during charging/discharging, thereby suppressing the change in the electrode structure. Thus, it was found out that the electrode capacity retention rate and the capacity are excellent.

In the meantime, in the electrode of Comparative Examples 1 and 2, the content of silicon carbide is less than 0.1 parts by weight relative to the total of 100 parts by weight of the negative electrode active material, and it was found out that the capacity retention rate is relatively low. This is understood to be a phenomenon that occurs when the particle breakage suppressing effect of silicon carbide is decreased.

In the case of the electrode of Comparative Examples 3 and 4, the content of silicon carbide is greater than 1 part by weight relative to the total of 100 parts by weight of the negative electrode active material, and it was found out that the capacity retention rate and the capacity are relatively low. This is understood to be a phenomenon that occurs when the content of silicon carbide is outside the scope of the present disclosure and the energy density of silicon is lowered.

### Experimental Example 2: cycle resistance increase rate

In Experimental Example 1 above, in the test, after the capacity retention rate was measured by charging/discharging (4.2-3.0V) at 0.33C/0.33C every 50 cycles, the resistance was measured by discharging at 2.5C pulse at SOC50. Then, the resistance increase rates were compared and analyzed.

For the evaluation on each measurement of the resistance increase rate, data at 200th cycle was calculated, and the results are noted in Table 3 below.

**[Table 3]**

| | Content of silicon carbide (parts by weight relative to 100 parts by weight of the negative electrode active material) | Resistance increase rate after 200 cycles (3.0-4.2 V range 1C/0.5C) |
|---|---|---|
| Example 1 | 0.6 | 6 |
| Example 2 | 0.1 | 9 |
| Example 3 | 0.2 | 8 |
| Example 4 | 0.4 | 8 |
| Example 5 | 0.8 | 7 |
| Example 6 | 1.0 | 9 |
| Comparative Example 1 | 0 | 10 |
| Comparative Example 2 | 0.05 | 12 |
| Comparative Example 3 | 1.5 | 10 |
| Comparative Example 4 | 2 | 11 |

From Table 3, it can be found out that the resistance increase rates of Comparative Examples after 200 cycles are higher than those of Examples. That is, it can be found out that when the ratio of silicon carbide does not satisfy the scope of the present disclosure, the resistance also increases according to instability of the silicon electrode structure.

Although the present disclosure has been described above with reference to embodiments, a person skilled in the relevant technical field or a person with ordinary skill in the relevant technical field will understand that various modifications and changes can be made to the present disclosure within a scope not departing from the spirit and technical area of the present disclosure described in the patent claims to be described later. Therefore, the technical scope of the present disclosure is not limited to the contents described in the detailed description of the disclosure, but should be determined by the patent claims.

## Claims

1. A negative electrode active material comprising:
silicon-based particles; and
silicon carbide distributed in the silicon-based particles,
wherein a content of the silicon carbide is 0.1 parts by weight to 1 part by weight relative to a total of 100 parts by weight of the negative electrode active material.

2. The negative electrode active material according to claim 1, wherein the content of the silicon carbide is 0.2 parts by weight to 0.8 parts by weight relative to the total of 100 parts by weight of the negative electrode active material.

3. The negative electrode active material according to claim 1, wherein in the silicon-based particles, a content of SiOx (x=0) is 90 parts by weight or more relative to 100 parts by weight of the negative electrode active material.

4. The negative electrode active material according to claim 1, wherein in the silicon-based particles, a content of SiOx (0<x<2) is 10 parts by weight or less relative to 100 parts by weight of the negative electrode active material.

5. The negative electrode active material according to claim 1, wherein a content of carbon is 0.03 parts by weight to 0.3 parts by weight relative to the total of 100 parts by weight of the negative electrode active material.

6. A negative electrode comprising the negative electrode active material according to claim 1.

7. The negative electrode according to claim 6 wherein a content of SiOx (x=0) is 90 parts by weight or more relative to 100 parts by weight of the negative electrode active material.

8. The negative electrode according to claim 7, further comprising a negative electrode conductive material; and a negative electrode binder.

9. A secondary battery comprising the negative electrode according to claim 6.

10. A method of preparing a negative electrode active material, wherein the negative electrode active material contains:
silicon-based particles; and
silicon carbide distributed in the silicon-based particles, and
a content of the silicon carbide is 0.1 parts by weight to 1 part by weight relative to the total of 100 parts by weight of the negative electrode active material.

11. The method according to claim 10, wherein the content of the silicon carbide is 0.2 parts by weight to 0.8 parts by weight relative to the total of 100 parts by weight of the negative electrode active material.

12. The method according to claim 10, wherein in the silicon-based particles, a content of SiOx (x=0) is 90 parts by weight or more relative to 100 parts by weight of the negative electrode active material.

13. The method according to claim 10, wherein in the silicon-based particles, a content of SiOx (0<x<2) is 10 parts by weight or less relative to 100 parts by weight of the negative electrode active material.

14. The method according to claim 10, wherein a content of carbon is 0.03 parts by weight to 0.3 parts by weight relative to the total of 100 parts by weight of the negative electrode active material.

15. A method of preparing a negative electrode active material, the method comprising:
reducing silicon dioxide to silicon through a reaction with carbon; and
forming silicon carbide by using remaining carbon after the reduction.

16. The method according to claim 15, wherein in the forming of the silicon carbide, the silicon obtained through the reduction is cooled according to a preset cooling speed so as to form the silicon carbide.

17. The method according to claim 16, wherein the preset cooling speed is 20°C/min to 70°C/min
